# EUROPEAN PATENT SPECIFICATION

(11) **EP 1 258 742 B1**
(45) Date of publication and mention of the grant of the patent: **26.10.2005**
(21) Application number: 00977968.7
(22) Date of filing: 28.11.2000
(51) Int. Cl.: G02B 3/00, C08F 20/30, C08F 22/10

(54) **LIGHT-RESISTANT MICROLENS ARRAY AND RESIN COMPOSITION FOR USE THEREIN**
LICHTBESTÄNDIGES MIKROLINSENARRAY UND HARZZUSAMMENSETZUNG ZUR VERWENDUNG DARIN
MOSAIQUE DE MICRO-LENTILLES RESISTANTE A LA LUMIERE ET COMPOSITION A BASE DE RESINE POUVANT ETRE UTILISEE DANS LADITE MOSAIQUE

(30) Priority: 29.11.1999 JP 33779699
(43) Date of publication of application: 20.11.2002
(73) Proprietor: OMRON CORPORATION, Kyoto, Kyoto 600-8530 (JP)
(72) Inventor: KITAMURA, Kyoji Omron Corp. 801 Minamifudodo-cho, Kyoto-shi, Kyoto 600-8530 (JP); HEGI, Yasuhiro Omron Corp. 801 Minamifudodo-cho, Kyoto-shi, Kyoto 600-8530 (JP); OKADA, Shinya Omron Corp. 801, Minamifudodo-cho, Kyoto-shi, Kyoto 600-8530 (JP); DOI, Masashi Omron Corp. 801, Minamifudodo-cho, Kyotto-shi, Kyoto 600-8530 (JP); WATANABE, Yuji Omron Corp. 801, Minamifudodo-cho, Kyoto-shi, Kyoto 600-8530 (JP)
(74) Representative: Kilian, Helmut
(86) International application number: PCT/JP2000/008357
(87) International publication number: WO 2001/040828

(56) References cited:
- EP-A2- 0 598 552
- JP-A- 3 106 918
- JP-A- 4 325 508
- JP-A- 4 337 307
- JP-A- 6 220 131
- JP-A- 8 209 076

## Description

### Technical Field

The present invention relates to a microlens array, particularly a microlens array excellent in light-resistance, and relates to a resin composition for use for the microlens array.

### Background Art

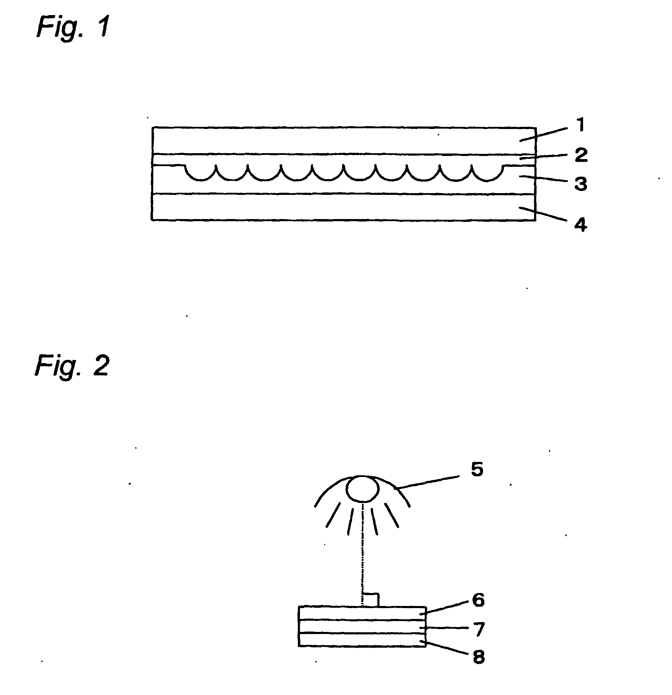

A microlens array has a structure where a lot of small convex lens are arranged on a plane as shown in Figure 1 and a resin layer of high refractive index(2) and a resin layer of low refractive index(3) are laminated between glass plates as substrates (Japanese Patent Kokai Publication Nos. 209076/1996 and 240802/1996). Such a microlens array is used in a liquid crystal projector, a projection TV and the like. The total thickness of the resin layer of high refractive index and the resin layer of low refractive index is generally about 40 to 50 µm. The diameter of the small convex lens constructing the microlens array is about 40µm. It is general that the layer having a function as convex lens is formed with a resin of high refractive index.

As resins forming the array, ultraviolet-ray-curable resins are generally used. As a resin component of high refractive index, sulfur-containing acrylates (including methacrylates; thereinafter the same is meant), aromatic acrylates containing one or two aromatic rings, halogen(except fluorine)-containing acrylates and the mixture of those acrylates are used. As a resin component of low refractive index, fluorine-containing acrylates and silicon-containing acrylates are used.

However, such a conventional microlens array has the following problem.

Recently, increasing brightness of a liquid crystal projector, for which a microlens array is mainly used, has so strongly been required that light strength of a light source has largely increased. For this reason, lowering of the light transmittance of the resin of high refractive index by light deterioration has become notable, though the resin of low refractive index has no problem of the light-deterioration. Therefore, improvement against the lowering of the light transmittance is strongly requested. Particularly, in the case of sulfur-containing acrylates which have most widely been used as the resin of high refractive index, its deterioration is remarkable.

### Disclosure of Invention

The present invention is to improve light-resistance of the resin layer of high refractive index in microlens array and to largely improve storage stability of a highly light-resistant photo-curable resin composition used to form the resin layer in order to prevent generation of fine precipitates.

The present invention relates to a microlens array comprising a laminate of a resin layer of high refractive index and a resin layer of low refractive index, wherein the resin layer of high refractive index contains as a component di(meth)acrylates of fluorene derivatives represented by the following general formula (1); 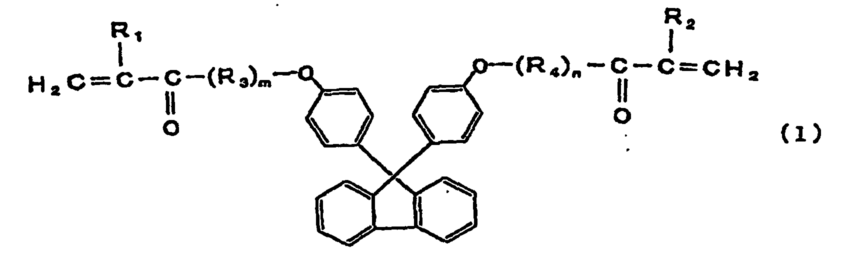 (wherein
R₁ and R₂ represent H or CH₃, independently;
R₃ and R₄ represent OCH₂CH₂, OCH(CH₃)CH₂, OCH(C₂H₅)CH₂, OCH₂CH₂CH₂ or OCH₂CH₂CH₂CH₂, independently;
m and n represent the number of 0 to 4, independently).

Further, the present invention relates to the above-mentioned microlens array wherein said resin layer of high refractive index particularly contains as a photo-polymerization initiator alkyl esters of aromatic acyl phosphinic acid represented by the general formula (2); 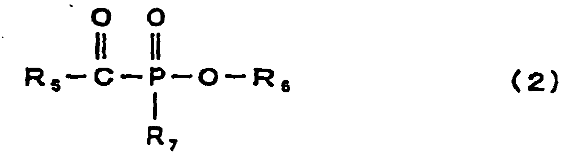 wherein
R₅ represents a phenyl group which may have a substituent(s),
R₆ represents an alkyl group having 12 or less carbons, and,
R₇ represents a phenyl group.

As the microlens array of the present invention is excellent in light-resistance, it is sufficiently usable in applications where high energy light source is used and specifically suitable for being used in the latest liquid crystal projector wiht a strong light source.

Furthermore, the present invention relates to a liquid crystal projector equipped with any one of the microlens arrays described above.

In the present description, the word of "(meth)acrylate" means both of acrylate and methacrylate.

Generally, the resin layer of high refractive index is the one having a refractive index of 1.57 or more, preferably 1.60 or more. The resin layer of low refractive index is the one having a refractive index of 1.47 or less, preferably 1.44 or less. It is desirable that the difference of the refractive indexes between the resin layer of high refractive index and the resin layer of low refractive index is 0.13 or more, preferably 0.16 or more. If the difference of the refractive indexes is less than 0.13, such treatments as increasing thickness, raising curvature of the microlens in the case of the same thickness and the like, are needed in order to obtain properties as a desired microlens array, and such treatments results in problems with production thereof.

### Best Mode for Carrying Out the Invention

In the general formula (1), R₁ and R₂ respectively represent a hydrogen atom or a methyl group. It is preferable that both of them are hydrogen atoms in order to achieve a higher refractive index.

R₃ and R₄ respectively represent an oxyethylene group, an oxypropylene group, an oxy(2-ethyl)ethylene group, an oxytriethylene group or an oxytetraethylene group. It is preferable that both of them are oxyethylene groups in order to achieve a higher refractive index.

m and n respectively represent the number of 0 to 4. It is preferable that both of them are 1 or 0, more preferably 1 in order to achieve a higher refractive index.

Di(meth)acrylates of fluorene derivatives represented by the general formula (1) are generally synthesized by an esterification reaction (i.e. (meth)acrylic esterification reaction) of fluorene derivatives represented by the following general formula (3); 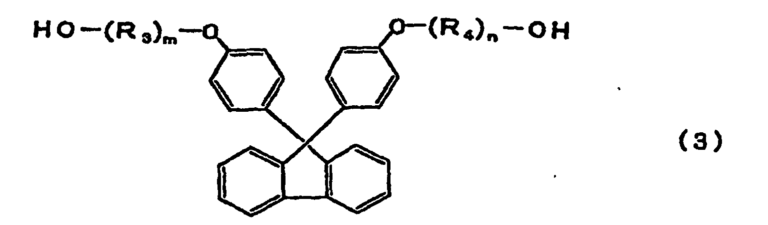 (wherein R₃, R₄, m and n are the same as above mentioned) with (meth)acrylic acid represented by the following general formula (4); 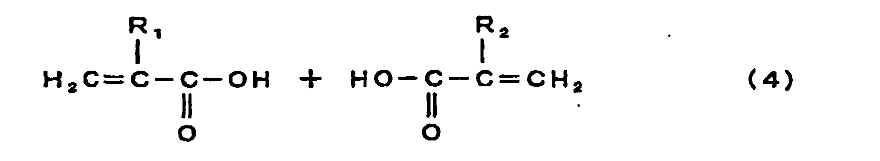 (wherein R₁ and R₂ are the same as above mentioned).

Di(meth)acrylates of fluorene derivatives represented by the general formula (1), wherein both m and n are 0, are generally synthesized by an esterification reaction (i.e. (meth)acrylic esterification reaction) of fluorene derivatives represented by the general formula (3a); 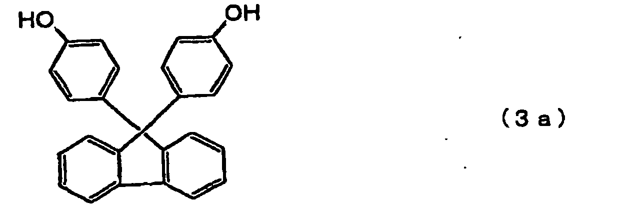 and (meth)acryloyl chloride represented by the following general formula (4a); 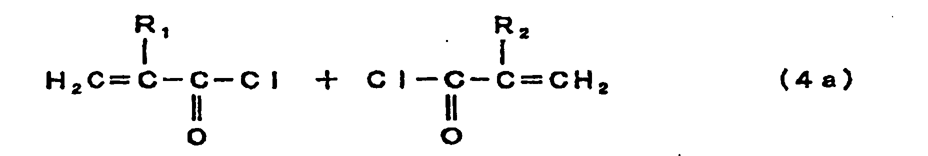 (wherein R₁ and R₂ are the same as above mentioned).

Particularly, most preferable diacrylate of a fluorene derivative in the present invention, that is 9,9-bis[4-(2-acryloyloxyethoxy)phenyl]fluorene represented by the following formula (5); 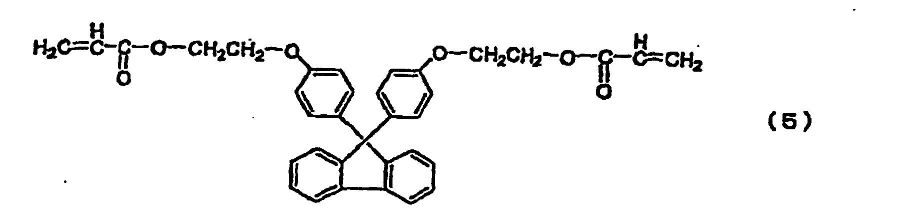 can be synthesized by the acrylic esterifiaction reaction of 9,9-bis[4-(2-hydroxyethoxy)phenyl]fluorene represented by the following formula (6):

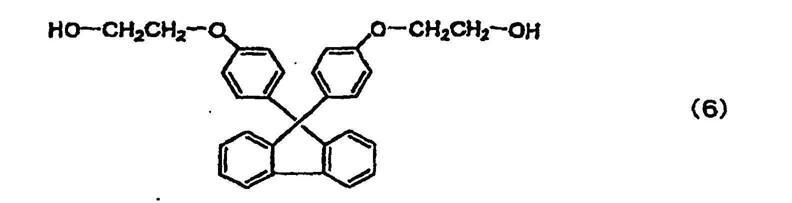

The synthetic methods described in Japanese Patent Kokai Publication Nos. 220131/1994, 325508/1992, 164903/1993 or 2939/1995 may be referred to. The descriptions of their synthetic methods are incorporated herein as a part of the present description.

Generally, a microlens array has a structure where a resin layer of high refractive index (2) and a resin layer of low refractive index (3) are laminated between glass plates (1) and (4). Conventional methods may be applied to laminate the resin layers (Japanese Patent Kokai Publication Nos. 209076/1996 and 240802/1996 and the like). The use of glass plates (1) and (4) in Figure 1 does not mean that the plate should be made of glass. Any substrate may be used as far as it has the same function as glass. For example, plastic plates having transparency can be used instead of the glass plate.

Whenever the microlens array is produced, di(meth)acrylates of fluorene derivatives as represented by the general formula (1) are pale yellow transparent solid or liquid of high viscosity at ambient temperature, so that a monomer which can dissolve the di(meth)acrylates is preferably used as a reactive diluent in laminating to form a microlens array. Thereby the handling of them becomes easy and it becomes easy to produce the microlens array. As to such monomers, any monomer may be used as far as it is one of radically polymerizable (meth)acrylates. As the monomers are used in the resin layer of high refractive index of the microlens array, (meth)acrylates having an aromatic ring in a molecule are preferably used so as not to decrease the refractive index as much as possible. For example, benzyl (meth)acrylate, o-, m-, and p-methylbenzyl (meth)acrylate, phenyl (meth)acrylate, o-, m-, and p-methylphenyl (meth)acrylate, phenoxyethyl (meth)acrylate, phenoxypropyl (meth)acrylate and the like are exemplified. Among them, methacrylates are preferable. In particular, benzyl methacrylate excellent in a diluting effect is preferable.

When the above-mentioned (meth)acrylates are mixed, a mixing ratio of the di(meth)acrylates of fluorene derivatives to the above-mentioned (meth)acrylates is 20:80 - 80:20 (weight ratio), preferably 40:60 - 60:40 (weight ratio).

When it is necessary to adjust such resin properties as viscosity, refractive index, hardness, glass transition temperature and the like, the other acrylates may be added in the range where the effects of the present invention are not diminished.

A photo-polymerization initiator is added to a resin composition forming the resin layer of high refractive index.

The photo-polymerization initiator can be used alone or in combination of two or more kinds. It is preferable to select the photo-polymerization initiator which hardly discolors the resin layer after curing for production of the microlens array. For example, 2-hydroxy-2-methyl-1-phenylpropane-1-one, 1-hydroxycyclohexylphenylketone and the like are preferable.

When the microlens array is produced by laminating the resin of high refractive index and the resin of low refractive index, photo-irradiation, particularly ultraviolet ray-irradiation is necessary for curing. In the case that the ultraviolet ray is irradiated through the glass plate (1) or (4), there is apprehension that the ultraviolet ray effective to the curing reaction is attenuated. In such a case, it is preferable to additionally use 2,4,6-trimethylbenzoyldiphenylphosphine oxide, bis(2,4,6-trimethylbenzoyl)phenylphosphine oxide and the like, having an absorption band in the longer wavelength region of the ultraviolet ray spectrum or in the visible ray region among the photo-polymerization initiators.

The present invention provides the use of a photo-curable resin composition for forming a resin layer of high refractive index of a microlens array having a laminate structure of the resin layer of high refractive index and a resin layer of low refractive index, and provides a photo-curable resin composition containing as components:
di(meth)acrylates of fluorene derivatives represented by the following general formula (1); 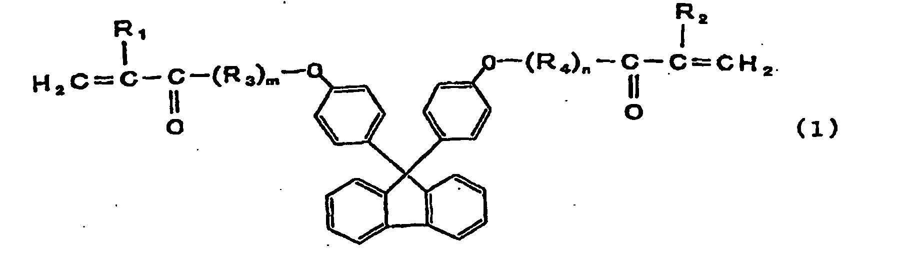
(wherein
R₁ and R₂ represent H or CH₃, independently;
R₃ and R₄ represent OCH₂CH₂, OCH(CH₃)CH₂, OCH(C₂H₅)CH₂, OCH₂CH₂CH₂ or OCH₂CH₂CH₂CH₂, independently;
m and n represent the number of 0 to 4, independently); and
a photo-polymerization initiator having an absorption band in the longer wavelength region of the ultraviolet ray spectrum or in the visible ray region.

In particular, when the photo-polymerization initiators represented by the foregoing general formula (2) is used, the photo-curable resin composition obtained for forming the resin layer of high refractive index is excellent in storage stability. Even when the composition is stored for a long period, fine precipitates are not generated in the resin composition. When the resin layer of high refractive index is formed by using the resin composition in which such fine precipitates are generated, the fine precipitates exist in the layer as they are, and as a results, optical properties of the microlens array are adversely influenced. But, in the case of using the photo-curable resin composition immediately after preparation, the fine precipitates are not generated, so that the above-mentioned acylphosphine oxides are usable as a photo-polymerization initiator.

Here, the present invention provides the use of a photo-curable resin composition for forming a resin layer of high refractive index of a microlens array having a laminate structure of the resin layer of high refractive index and a resin layer of low refractive index, being a resin composition for a microlens array, comprising;
di(meth)acrylates of fluorene derivatives represented by the following general formula (1); 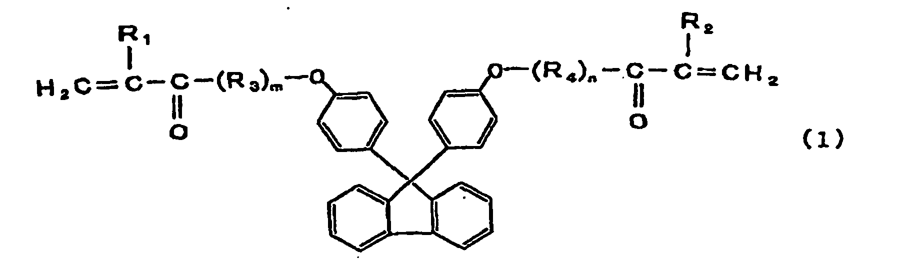
(wherein
R₁ and R₂ represent H or CH₃, independently;
R₃ and R₄ represent OCH₂CH₂, OCH(CH₃)CH₂, OCH(C₂H₅)CH₂, OCH₂CH₂CH₂ or OCH₂CH₂CH₂CH₂, independently;
m and n represent the number of 0 to 4, independently) as a component; and
alkyl esters of aromatic acylphosphinic acid represented by the general formula (2); 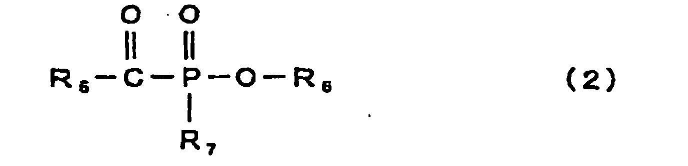 (wherein
R₅ represents a phenyl group which may have a substituent(s),
R₆ represents an alkyl group having 12 or less carbons, and,
R₇ represents a phenyl group) as a photo-polymerization initiator.

The resin composition is cured by photo-irradiation to form the resin layer of high refractive index, which is excellent in the light-resistance. In addition, the resin composition is stable for a long period without fine precipitates generated in storage, and therefore, is excellent in storage stability and transport stability as a product.

As to the photo-polymerization initiator represented by the general formula (2) in the present invention, for example, ethyl ester of 2,4,6-trimethylbenzoylphenylphosphinic acid is exemplified as a concrete example.

The photo-polymerization initiator in the present invention is added at an amount of 0.1 - 10 parts by weight, preferably 1 - 5 parts by weight with respect to 100 parts by weight of the total amount of photo-polymerizable monomers.

In the resin layer of low refractive index, the conventional (meth)acrylates, such as (meth)acrylates comprising fluorine-containing (meth)acrylates as a main component, are used.

The photo-cured resin composition comprising di(meth)acrylates of fluorene derivatives as a main component is generally more excellent by 10 or more times in light-resistance than the conventional photo-cured resin of high refractive index comprising sulfur-containing (meth)acrylates as a main component. In the present invention, the light-resistance means comparison of the resistance against the deterioration that a resin layer of high refractive index of a microlens array is deteriorated and colored by irradiation of a light source of a liquid crystal projector and the light transmittance is decreased.

The measuring method of the light-resistance is described below.

### [Measuring method of the light-resistance]

A photo-curable resin composition was inserted between two quartz glass plates having a thickness of 0.5 mm and is cured by ultraviolet ray of 6000 mJ/cm². The test piece was prepared so that the thickness of the resin layer should be 24±1 µm. The light transmittance of this test piece was measured at the wavelength of 450 nm by means of an ultraviolet and visible spectrophotometer (Type UV-2500PC; product of Shimazu Seisakusho K.K.) and the measured value was used as an initial value. The test piece was irradiated so that the irradiation strength from a metallic halide lamp should be the same in the perpendicular direction to the glass plate as shown by Figure 2.

The light-resistance of a prepared microlens array was also measured according to the above-mentioned method by irradiation from the side of the resin layer of low refractive index.

The irradiation time when the lighttransmittance was reduced by 10% from the initial value was adopted as a measurement result of the light-resistannce.

When a sulfur-containing (meth)acrylate was used as a resin of high refractive index, the light transmittance was reduced down by 10 or more % in 10 to 40 hours. When di(meth)acrylates of fluorene derivatives were used, the light-resistance was increased up to 200 to 2000 hours. Therefore, it was found that the light-resistance was improved by 5 to 200 times. It is to be noted that the light-resistance of the microlens array depends directly on the light-resistance of the resin constructing the resin layer of high refractive index.

In addition, when alkyl esters of aromatic acyl phosphinic acid represented by the foregoing general formula (2) are used as a photo-polymerization initiator in the photo-curable resin composition of high refractive index for forming the resin layer of high refractive index of the microlens array of the present invention, storage stability of the resin composition can be improved to be extremely stable.

The measuring method of the storage stability of a resin composition solution is described below.

### [Measuring method of storage stability]

A photo curable resin composition solution which was left to stand in the predetermined time was inserted between two glass plates, the solution was observed at a magnification of 50 times by means of a polarization microscope, and the number of the fine precipitates generated in 100 mm² was measured visually. A thickness gauge having 400 µm thickness was set put between the two glass plates in order to maintain the fixed thickness of the solution.

Accordingly, the microlens array of the present invention has the following advantages as compared with the conventional microlens array.
1. Because of the excellent light-resistance, the light-deterioration caused by the light source of a liquid crystal projector is very small and the microlens array of the present invention is so hardly colored that it becomes possible to use the microlens array for a long period (long use-life).
2. Because the refractive index is as high as that of the conventional sulfur-containing (meth)acrylates, it is possible to produce a microlens array of the large difference of the refractive indexes.
3. Because the resin composition for forming the resin layer of high refractive index in which the compound represented by the foregoing general formula (2) is used as a photo-polymerization initiator is excellent in the storage stability in liquid state for a long period and generates no fine precipitates, the microlens array produced is excellent in optical properties, such as transparency.

The microlens array of the present invention can be applied not only to a liquid crystal projector but also to a projection TV, a viewfinder of video camera, a portable TV and the like. Particularly, it is advantageous that the microlens array is installed in the liquid crystal projector for which prevention of the light-deterioration caused by the light source of stronger light strength has been recently requested.

### Brief Description of Drawings

Figure 1 is a schematic cross-sectional view of a microlens array. In the Figure, the numeral 1 represents a glass plate, the numeral 2 represents a resin layer of high refractive index, the numeral 3 represents a resin layer of low refractive index, and the numeral 4 represents a glass plate.
Figure 2 is a schematic constitutional view of the measuring method for the light-resistance. In the Figure, the numeral 5 represents a metallic halide lamp, the numeral 6 represents a glass plate, the numeral 7 represents a resin layer to be measured (thickness of 24±1 µm), and the numeral 8 represents a glass plate.

The present invention is explained by Examples in the following, but the present invention is not limited to those Examples. The word "part" represents "part by weight" in the Examples.

### Example 1

9,9-bis[4-(2-acryloyloxyethoxy)phenyl]fluorene represented by the formula (5) and benzyl methacrylate represented by the following formula (7) were mixed in an amount of 50 parts, respectively. To the resultant mixture, 1 part of 2-hydroxy-2-methyl-1-phenylpropane-1-one .(product of Ciba Specialty Chemicals K.K., trade name **"Darocur 1173"**) and 2 parts of 2,4,6-trimethylbenzoyldiphenylphosphine oxide (products of BASF Japan Ltd., trade name **"Lucirin TPO"**) as photo-polymerization initiators were mixed and dissolved to give a resin composition of high refractive index (A). The resultant composition (A) had a refractive index (n_{D}) of 1.60 after cured by ultraviolet ray.

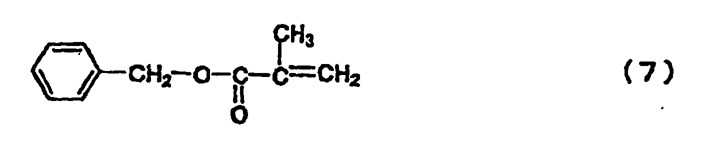

Separately, 48 parts of heptadecafluorodecyl acrylate, 19 parts of dicyclopentanyl acrylate, 16 parts of isobornyl acrylate and 14 parts of neopentyl glycol diacrylate were mixed and stirred. To the resultant mixture, 1 part of 2-hydroxy-2-methyl-1-phenylpropane-1-one (above-mentioned) and 2 parts of 2,4,6-trimethylbenzoyldiphenylphosphine oxide (above-mentioned) as photo-polymerization initiators were mixed and dissolved to give a resin composition of low refractive index (B). The resultant composition (B) had refractive index (n_{D}) of 1.44 after cured by ultraviolet ray.

Using the resin composition of high refractive index (A) and the resin composition of low refractive index (B), a microlens array was produced according to the method described in Japanese Patent Kokai Publication Nos. 240802/1996 and 209076/1996. As glass plates quartz glass having a thickness of 0.5 mm was used and an average thickness of each of the resin layer of high refractive index and the resin layer of low refractive index was adjusted to be 24±1 µm.

Concretely, using the resin composition of low refractive index (B) as an ultraviolet curable resin described on lines 90 to 97, page 2 in Japanese Patent Kokai Publication No. 240802/1996, an optical element was firstly formed by the same method as described in the above-mentioned Publication. Secondly, using the resin composition of high refractive index (A), a microlens array was produced according to the method described on line 65, page 3 to line 10, page 4 in Japanese Patent Kokai Publication No. 209076/1996.

The measurement result of the light-resistance of the microlens array produced was 1500 hours.

### Comparative Example 1

A sulfur-containing methacrylate represented by the following formula (8) (bis(4-methacryloyl-thiophenyl)sulfide (product of SUMITOMO SEIKA CHEMICALS CO.,LTD., trade name "MPSMA") and benzyl methacrylate represented by the formula (7) were mixed in an amount of 50 parts, respectively. To the resultant mixture, 1 part of 2-hydroxy-2-methyl-1-phenylpropane-1-one (above-mentioned) and 2 parts of 2,4,6-trimethylbenzoyldiphenylphosphine oxide (above-mentioned) as photo-polymerization initiators were mixed and dissolved to give a resin composition of high refractive index (C). The resultant composition (C) had refractive index (n_{D}) of 1.62 after cured by ultraviolet ray.

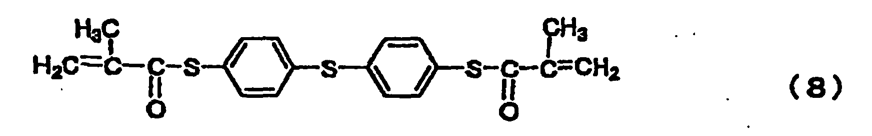

Using the resin composition of high refractive index (C) and the resin composition of low refractive index (B) prepared in Example 1, a microlens array was produced in the same manner as in Example 1.

The measurement result of the light-resistance of the microlens array produced was 30 hours.

From the results of Example 1 and Comparative Example 1, it was found that the light-resistance of the microlens array was improved by 50 times by replacing the sulfur-containing acrylate with the discrylate of fluorene derivative.

### Example 2

To the mixture of 50 parts of 9,9-bis[4-(2-acryloyloxyethoxy)phenyl]fluorene represented by the foregoing formula (5) and 50 parts of benzyl methacrylate represented by the foregoing formula (7), 4 parts of ethyl ester of 2,4,6-trimethylbenzoylphenylphosphinic acid represented by the following formula (9) (product of BASF Japan Ltd., trade name **"Lucirin LR8893"**) was mixed as a photo-polymerization initiator and dissolved to give a photo-curable resin composition of high refractive index (D).

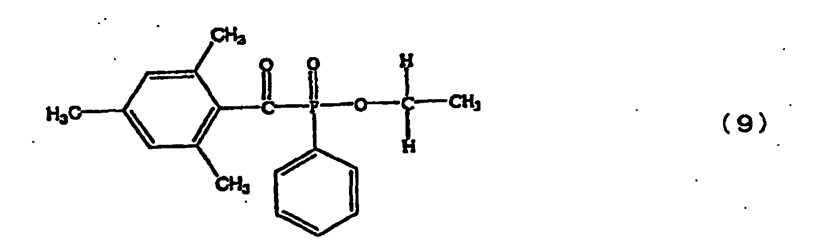

After the resultant composition (D) was stored at ambient temperature for 90 days, fine precipitates were not generated and the composition had refractive index (n_{D}) of 1.60 after cured by ultraviolet ray.

Then, using the resin composition of high refractive index (D) stored at ambient temperature for 90 days and the resin composition of low refractive index (B) in Example 1, a microlens array was produced by the same procedure as in Example 1.

As to the produced microlens array, the measurement result of the light-resistance of the microlens array produced was 2000 hours.

### Comparative Example 2

A resin composition of high refractive index (a) was prepared in the same manner as in Example 2, except that 4 parts of 2,4,6-trimethylbenzoyldiphenylphosphine oxide (product of BASF Japan Ltd., trade name **"Lucirin TPO")** (above-mentioned) represented by the following formula (10); 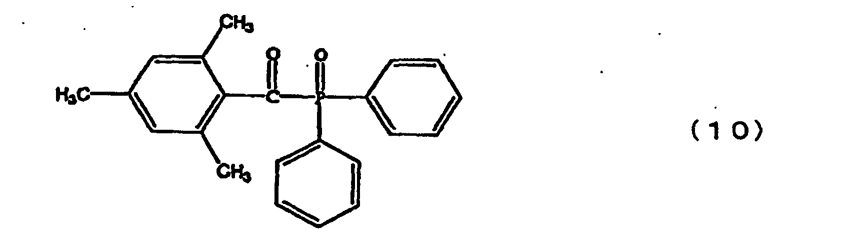 was used instead of the photo-polymerization initiator (9) in Example 2.

### Comparative Example 3

A resin composition of high refractive index (b) was prepared in the same manner as in Example 2, except that 4 parts of bis(2,4,6-trimethylbenzoyl)phenylphosphine oxide (product of Ciba Specialty Chemicals K.K., trade name **"Irgacure 819")** represented by the following formula (11); 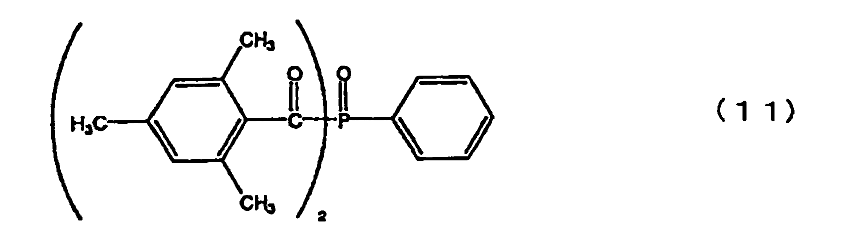 was used instead of the photo-polymerization initiator (9) in Example 2.

### Comparative Example 4

A resin composition of high refractive index (c) was prepared in the same manner as in Example 2, except that 4 parts of the mixture (product of Ciba Specialty Chemicals K.K., trade name **"Irgacure 1850"**) of 1:1 (weight ratio) of bis(2,6-dimethoxybenzoyl)-2,4,4-trimethylpentylphosphine oxide represented by the following formula (12); 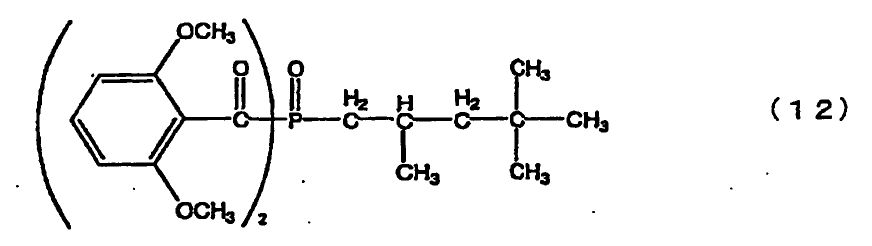 and 1-hydroxycyclohexyl phenyl ketone was used instead of the photo-polymerization initiator (9) in Example 2.

Storage stabilities as a solution of the resin compositions in Example 2 and Comparative Examples 2 to 4 were measured. In the resin compositions (a), (b) and (c) of Comparative Examples 2 to 4, about 10 fine precipitates were generated after 3 days. The number of the fine precipitates increased to about 100 to 200 after 5 days. It was remarkably contrastive that in the resin composition (D) of Example 2 any generation of fine precipitates was not observed even after 90 days.

In the resin composition (D) of Example 2, it was confirmed that the use of alkyl esters of aromatic acyl phosphinic acid represented by the general formula (2) as a photo-polymerization initiator resulted in excellent storage stability of the resin composition.

Microlens arrays were produced in the same manner as in Example 2, except that the resin compositions of high refractive index in Comparative Examples 2 to 4 were respectively used after left to stand at ambient temperature for 5 days. The existence of fine precipitates was observed visually in each of the microlens arrays produced and was not desirable for optical properties of a microlens array.

However, when the resin compositions of Comparative Examples 2 to 4 were used immideiately after preparation to produce microlens arrays, the fine precipitates as mentioned above were not observed.

A photo-curable resin composition of high refractive index of the present invention, which is used in a resin layer of high refractive index of a microlens array, is excellent in light-resistance after cured. A microlens array of the present invention, which is produced by using the resin composition, is excellent in light-resistance, so that it is suitable for the microlens array to be applied to a liquid crystal projector using a strong light source. In addition, when alkyl esters of aromatic acyl phosphinic acid represented by the general formula (2) are used as a photo-polymerization initiator in the photo-curable resin composition, storage stability as a solution is largely improved, fine precipitates are not generated even after the resin composition is left to stand at ambient temperature for 3 months. The storage stability is improved by 30 or more times.

## Claims

1. A microlens array comprising a laminate of a resin layer of high refractive index and a resin layer of low refractive index, **characterized by** that the resin layer of high refractive index contains as a component di(meth)acrylates of fluorene derivatives represented by the following general formula (1); 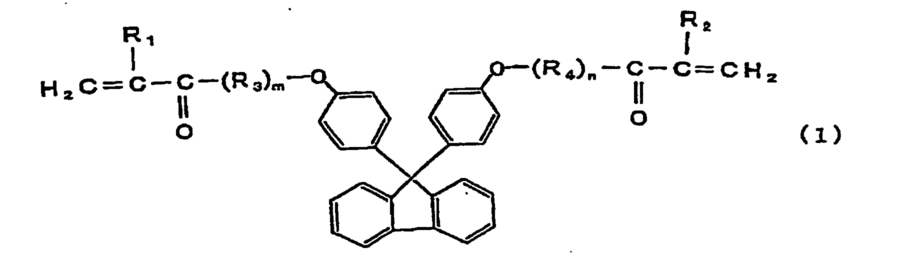 wherein
R₁ and R₂ represent H or CH₃, independently;
R₃ and R₄ represent OCH₂CH₂, OCH(CH₃)CH₂, OCH(C₂H₅)CH₂, OCH₂CH₂CH₂ or OCH₂CH₂CH₂CH₂, independently;
m and n represent the number of 0 to 4, independently

2. A microlens array according to Claim 1, wherein the resin layer of high refractive index contains as a component (meth)acrylates.

3. A microlens array according to Claim 2, wherein the (meth)acrylates are aromatic (meth)acrylates.

4. A microlens array according to any one of Claims 1 to 3, wherein the resin layer of high refractive index contains a photo-polymerization initiator having an absorption band in the longer wavelength region of the ultraviolet ray spectrum or in the visible ray region.

5. A microlens array according to any one of Claims 1 to 3, wherein the resin layer of high refractive index contains as a photo-polymerization initiator an alkyl ester of aromatic acyl phosphinic acid represented by the general formula (2); 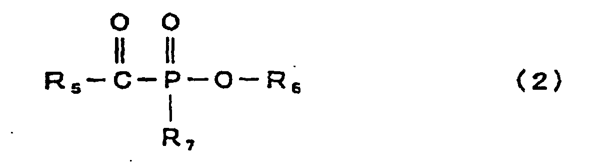 wherein
R₅ represents a phenyl group, which may have a substituent(s),
R₆ represents an alkyl group having 12 or less carbons, and,
R₇ represents a phenyl group.

6. Use of a photo-curable resin composition for forming a resin layer of high refractive index of a microlens array comprising a laminate of the resin layer of high refractive index and a resin layer of low refractive index, the photo-curable resin composition comprising di(meth)acrylates of fluorene derivatives represented by the following general formula (1): 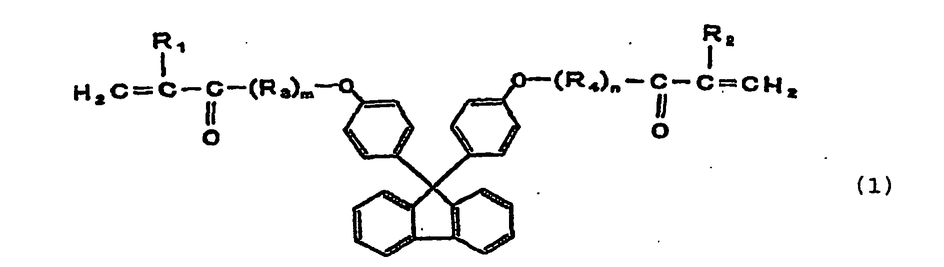 wherein
R₁ and R₂ represent H or CH₃, independently;
R₃ and R₄ represent OCH₂CH₂, OCH(CH₃)CH₂, OCH(C₂H₅)CH₂, OCH₂CH₂CH₂ or OCH₂CH₂CH₂CH₂, independently;
m and n represent the number of 0 to 4, independently as a main component; and
a photo-polymerization initiator having an absorption band in the longer wavelength region of the ultraviolet ray spectrum or in the visible ray region.

7. Use according to claim 6, wherein the photo-polymerization initiator is an alkyl ester of aromatic acyl phosphinic acid represented by the following formula (2): 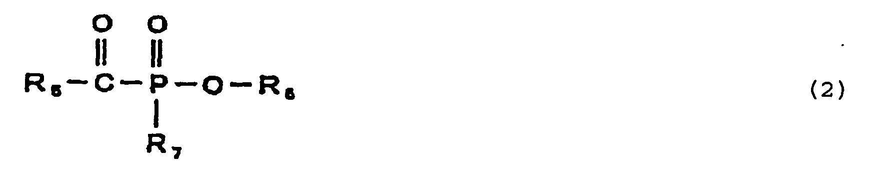 wherein
R₅ represents a phenyl group which may have a substituent,
R₆ represents an alkyl group having 12 or less carbons, and,
R₇ represents a phenyl group.

8. A liquid crystal projector, equipped with the microlens array according to any one of Claims 1 to 5.

## Patentansprüche

1. Mikrolinsenfeld mit einem Laminat aus einer Harzschicht mit hohem Brechungsindex und einer Harzschicht mit niedrigem Brechungsindex, **dadurch gekennzeichnet, dass** die Harzschicht mit hohem Brechungsindex als Komponente Derivate von Di(meth)acrylat von Fluoren, dargestellt durch die folgende allgemeine Formel (1), enthält: 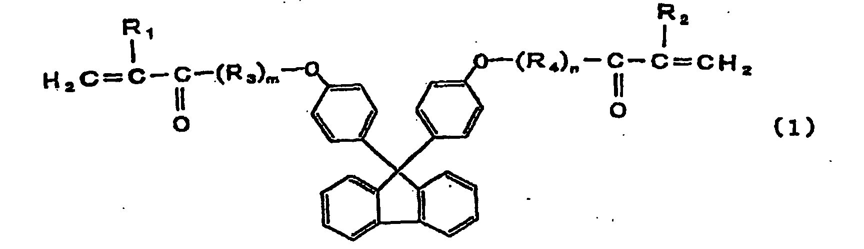 wobei
R₁ und R₂ unabhängig voneinander H oder CH₃, darstellen;
R₃ und R₄ unabhängig voneinander OCH₂CH₂, OCH(CH₃)CH₂, OCH (C₂H₅)CH₂, OCH₂CH₂CH₂ oder OCH₂CH₂CH₂CH₂ darstellen;
m und n unabhängig voneinander eine Zahl von 0 bis 4 darstellen.

2. Mikrolinsenfeld nach Anspruch 1, wobei die Harzschicht mit hohem Brechungsindex als Komponente (Meth)acrylate enthält.

3. Mikrolinsenfeld nach Anspruch 2, wobei die (Meth)acrylate aromatische (Meth)acrylate sind.

4. Mikrolinsenfeld nach irgendeinem der Ansprüche 1 bis 3, wobei die Harzschicht mit hohem Brechungsindex einen Photopolymerisationsinitiator mit einem Absorbtionsband im Bereich längerer Wellenlängen des Ultraviolettspektrums oder im sichtbaren Bereich enthält.

5. Mikrolinsenfeld nach irgendeinem der Ansprüche 1 bis 3, wobei die Harzschicht mit hohem Brechungsindex als Photopolymerisationsinitiator - einen Alkylesther von aromatischer Acylphosphinsäure, dargestellt durch die allgemeine Formel (2), enthält: 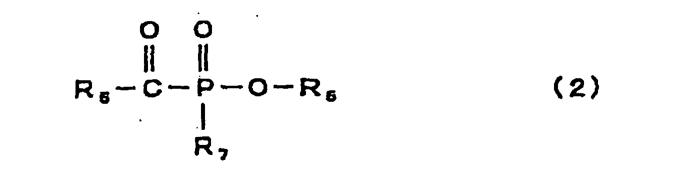 wobei
R₅ eine Phenylgruppe darstellt, welche (einen) Substituenten haben kann,
R₆ eine Alkylgruppe mit 12 oder weniger Kohlenstoffatomen darstellt, und
R₇ eine Phenylgruppe darstellt.

6. Verwendung einer photohärtbaren Harzzusammensetzung zur Ausbildung einer Harzschicht mit hohem Brechungsindex eines Mikrolinsenfeldes mit einem Laminat aus einer Harzschicht mit einem hohem Brechungsindex und einer Harzschicht mit niedrigem Brechungsindex, wobei die photohärtbare Harzzusammensetzung Derivate von Di(meth)acrylat von Fluoren, dargestellt durch die folgende allgemeine Formel (1): 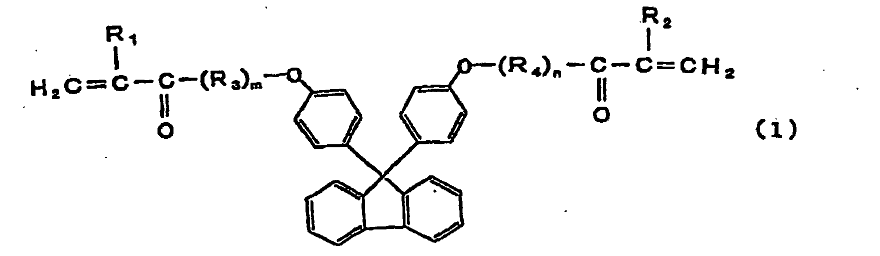 wobei
R₁ und R₂ unabhängig voneinander H oder CH₃ darstellen,
R₃ und R₄ unabhängig voneinander OCH₂CH₂, OCH(CH₃)CH₂, OCH(C₂H₅)CH₂, OCH₂CH₂CH₂ oder OCH₂CH₂CH₂CH₂ darstellen;
m und n unabhängig voneinander eine Zahl von 0 bis 4 darstellen, als Hauptkomponente, und
einen Photopolymerisationsinitiator mit einem Absorptionsband im Bereich längerer Wellenlängen des Ultraviolettspektrums oder im sichtbaren Bereich aufweist.

7. Verwendung nach Anspruch 6, wobei der Photopolymerisationsinitiator ein Alkylesther von aromatischer Acylphosphinsäure, dargestellt durch die folgende Formel (2), ist: 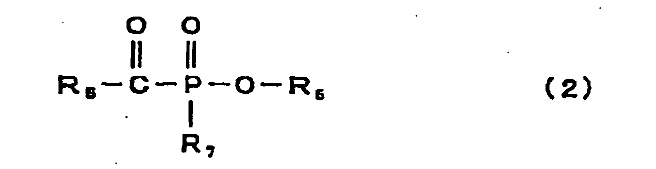 wobei
R₅ eine Phenylgruppe darstellt, die einen Substituenten haben kann,
R₆ eine Alkylgruppe mit 12 oder weniger Kohlenstoffatomen darstellt, und
R₇ eine Phenylgruppe darstellt.

8. Flüssigkristallprojektor, versehen mit dem Mikrolinsenfeld nach irgendeinem der Ansprüche 1 bis 5.

## Revendications

1. Réseau de microlentilles comprenant un stratifié d'une couche de résine ayant un indice de réfraction élevé et d'une couche de résine ayant un indice de réfraction faible, **caractérisé en ce que** la couche de résine ayant un indice de réfraction élevé contient en tant que composant des dérivés de di (méth) acrylates de fluorène représentés par la formule générale suivante (1) : 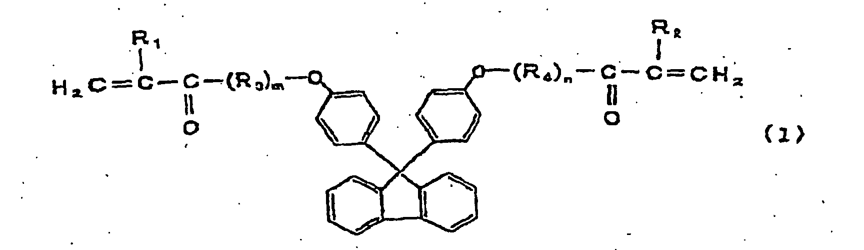 dans laquelle
R₁ et R₂ représentent H ou CH₃, indépendamment ;
R₃ et R₄ représentent OCH₂CH₂, OCH(CH₃)CH₂, OCH(C₂H₅)CH₂, OCH₂CH₂CH₂ ou OCH₂CH₂CH₂CH₂, indépendamment ;
m et n représentent un nombre de 0 à 4, indépendamment.

2. Réseau de microlentilles selon la revendication 1, dans lequel la couche de résine ayant un indice de réfraction élevé contient en tant que composant des (méth)acrylates.

3. Réseau de microlentilles selon la revendication 2, dans lequel les (méth)acrylates sont de (méth)acrylates aromatiques.

4. Réseau de microlentilles selon l'une quelconque des revendications 1 à 3, dans lequel la couche de résine ayant un indice de réfraction élevé contient un initiateur de photopolymérisation ayant une bande d'absorption dans la région des longueurs d'ondes plus longues du spectre des rayons ultraviolets ou dans la région des rayons visibles.

5. Réseau de microlentilles selon l'une quelconque des revendications 1 à 3, dans lequel la couche de résine ayant un indice de réfraction élevé contient en tant qu'initiateur de photopolymérisation un ester alkylique d'acide acylphosphinique aromatique représenté par la formule générale (2) : 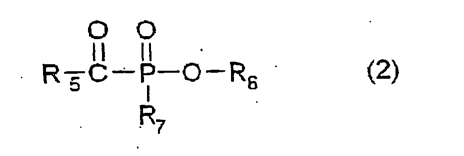 dans laquelle
R₅ représente un groupe phényle, qui peut avoir un ou des substituants,
R₆ représente un groupe alkyle ayant 12 carbones ou moins, et
R₇ représente un groupe phényle.

6. Utilisation d'une composition de résine photodurcissable pour former une couche de résine ayant un indice de réfraction élevé d'un réseau de microlentilles comprenant un stratifié de la couche de résine ayant un indice de réfraction élevé et d'une couche de résine ayant un indice de réfraction faible, la composition de résine photodurcissable comprenant des dérivés de di(méth)acrylates de fluorène représentés par la formule générale suivante (1) : 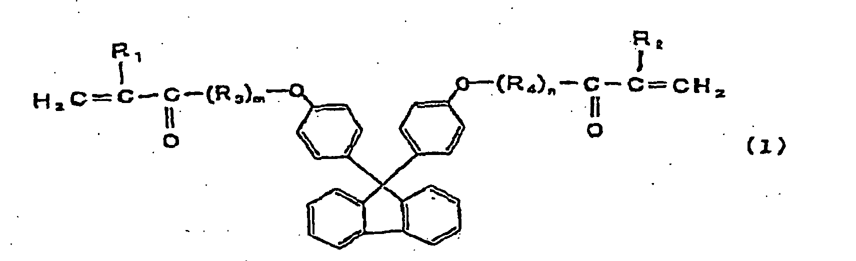 dans laquelle
R₁ et R₂ représentent H ou CH₃, indépendamment ;
R₃ et R₄ représentent OCH₂CH₂, OCH(CH₃)CH₂, OCH(C₂H₅)CH₂, OCH₂CH₂CH₂ ou OCH₂CH₂CH₂CH₂, indépendamment ;
m et n représentent un nombre de 0 à 4, indépendamment en tant que composant principal ; et
un initiateur de photopolymérisation ayant une bande d'absorption dans la région des longueurs d'ondes plus longues du spectre des rayons ultraviolets ou dans la région des rayons visibles.

7. Utilisation selon la revendication 6, dans laquelle l'initiateur de photopolymérisation est un ester alkylique d'un acide acylphosphinique aromatique représenté par la formule suivante (2) : 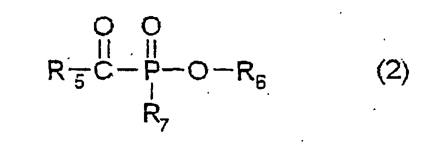 dans laquelle
R₅ représente un groupe phényle, qui peut avoir un substituant,
R₆ représente un groupe alkyle ayant 12 carbones ou moins, et
R₇ représente un groupe phényle.

8. Projecteur à cristaux liquides, équipé du réseau de microlentilles selon l'une quelconque des revendications 1 à 5.
